(19) Europäisches Patentamt
European Patent Office
Office européen des brevets

(11) EP 0 609 524 B1

(12) **EUROPÄISCHE PATENTSCHRIFT**

(45) Veröffentlichungstag und Bekanntmachung des Hinweises auf die Patenterteilung:
**13.11.1996 Patentblatt 1996/46**

(51) Int Cl.[6]: **C08L 83/08**, B01F 17/54, C08J 3/03, C08K 3/00, C08K 5/00, C09D 15/00, B27K 3/00

(21) Anmeldenummer: **93119858.4**

(22) Anmeldetag: **09.12.1993**

# (54) In Wasser selbstdispergierende Organopolysiloxan enthaltende Zusammensetzungen

In water self-dispersible compositions containing organopolysiloxane

Compositions autodispersables dans l'eau contenant des organopolysiloxanes

(84) Benannte Vertragsstaaten:
**AT BE CH DE ES FR GB IT LI NL SE**

(30) Priorität: **10.12.1992 DE 4241727**

(43) Veröffentlichungstag der Anmeldung:
**10.08.1994 Patentblatt 1994/32**

(73) Patentinhaber: **Wacker-Chemie GmbH**
**D-81737 München (DE)**

(72) Erfinder:
- **Mayer, Hans, Dr.**
  **D-84489 Burghausen (DE)**
- **Kolleritsch, Günther**
  **D-84524 Neuötting (DE)**
- **König-Lumer, Ingeborg**
  **D-84489 Burghausen (DE)**

(56) Entgegenhaltungen:

| | |
|---|---|
| **EP-A- 0 055 606** | **EP-A- 0 186 847** |
| **DE-A- 1 418 764** | **DE-A- 1 444 553** |
| **DE-A- 1 769 287** | **DE-A- 1 816 392** |
| **US-A- 3 152 161** | **US-A- 3 355 424** |

- **DATABASE WPI Week 9009, Derwent Publications Ltd., London, GB; AN 90-062768 & JP-A-2 015 011 (DOW CORNING KK) 18. Januar 1990**
- **Römpps Chemie-Lexikon, 8. Aufl., Franckh'sche Verlagshandlung, Stuttgart 1985, Seite 3058, Stichwort "Perlite"**
- **DATABASE WPI Week 9009, Derwent Publications Ltd., London, GB; AN 90-062768 & JP-A-2 015 011**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 609 524 B1

Printed by Jouve, 75001 PARIS (FR)

## Beschreibung

Die Erfindung betrifft in Wasser selbstdispergierende, Organopolysiloxan enthaltende Zusammensetzungen, deren Herstellung und deren Verwendung.

In EP 68 671 A2 (Dow Corning Ltd.; ausgegeben am 5. Januar 1983) sowie US 4,661,551 (Wacker-Chemie GmbH; ausgegeben am 28. April 1984) bzw. der entsprechenden DE 34 47 636 A1 (ausgegeben am 3. Juli 1986) werden bei Verdünnen mit Wasser durchsichtige Gemische ergebende, Organopolysiloxan aufweisende Zusammensetzungen beschrieben, die als wesentliche Bestandteile Salz von wasserlöslicher organischer und anorganischer Säure und aminofunktionellem Organopolysiloxan, eine weitere Organosiliciumverbindung und gegebenenfalls Lösungsmittel enthalten. Des weiteren wird in US 4,757,106 (Wacker-Chemie GmbH; ausgegeben am 12. Juli 1988) bzw. der entsprechenden EP 242 798 A (ausgegeben am 28. Oktober 1987) wäßrige Emulsionen von Organopolysiloxanen mit SiOC-gebundenen aliphatischen Resten und als Emulgiermittel Salz von wasserlöslicher organischer und anorganischer Säure und aminofunktionellem Organopolysiloxan beschrieben.

Gegenstand der Erfindung sind in Wasser selbstdispergierende, Organopolysiloxan enthaltende Zusammensetzungen aus

(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,
(B) bei 20°C und 1020 hPa höchstens zu einem Gewichtsteil in 100 Gewichtsteilen Wasser löslichen Feststoff, ausgenommen bei 20°C und 1020 hPa feste Organosiliciumverbindungen, die sich unter diesen Bedingungen zu mehr als 50 Gewichtsteilen in 100 Gewichtsteilen (A) gegebenenfalls im Gemisch mit (C) lösen,
und gegebenenfalls
(C) Organosiliciumverbindung mit basischem Stickstoff in Mengen von 0 bis 0,5 Gewichtsprozent, bezogen auf das Gewicht dieser Organosiliciumverbindung,

sowie gegebenenfalls weiteren Komponenten, ausgewählt aus der Gruppe bestehend aus Konservierungsmittel, Dispergiermittel und organischem Lösungsmittel, wobei die Zusammensetzungen Feststoff (B) in Mengen von 0,1 bis 2 Gewichtsteilen, je Gewichtsteil Bestandteil (A), enthalten.

"Selbstdispergierbarkeit" bedeutet im Rahmen dieser Erfindung, daß die erfindungsgemäßen Zusammensetzungen mit Wasser spontan und ohne Einsatz der üblicherweise zur Herstellung von Dispersionen aufgewendeten mechanischen Energie, durch bloßes Eingießen in Wasser und Umrühren stabile wäßrige Verdünnungen ergeben.

Der Begriff "basischer Stickstoff", wie er im Rahmen dieser Erfindung mit Mengenangaben gebraucht wird, bezieht sich auf Stickstoff, berechnet als Element.

Die Organopolysiloxane, durch deren Umsetzung mit organischer oder anorganischer Säure Bestandteil (A) der erfindungsgemäßen Zusammensetzung erhältlich ist, sind solche der Formel

$$R_aR^1_b(OR^2)_cSiO_{\frac{4-a-b-c}{2}} \quad \text{(I)},$$

worin

R gleich oder verschieden sein kann und Wasserstoff oder einwertige, von basischem Stickstoff freie, SiC-gebundene organische Reste mit 1 bis 20 Kohlenstoffatomen bedeutet,
$R^1$ gleich oder verschieden sein kann und einwertige, SiC-gebundene Reste mit basischem Stickstoff der nachstehenden Formel (II) bedeutet,
$R^2$ gleich oder verschieden sein kann und Wasserstoffatome oder einwertige organische Reste bedeutet,
a 0, 1, 2 oder 3,
b 0, 1, 2 oder 3 und
c 0, 1, 2 oder 3 ist,

mit der Maßgabe, daß die Summe aus a, b und c kleiner oder gleich 3 ist und Rest $R^1$ in Mengen von mehr als 0,5 Gewichtsprozent basischem Stickstoff pro Organopolysiloxanmolekül vorhanden ist.

Es handelt sich bei Rest R um gegebenenfalls substituierte Kohlenwasserstoffreste mit 1 bis 20 Kohlenstoffatomen, wobei Kohlenwasserstoffreste mit 1 bis 8 Kohlenstoffatomen, insbesondere der Methyl- und der Isooctylrest, besonders bevorzugt sind.

Vorzugsweise ist an jedes Siliciumatom, an das ein Wasserstoffatom gebunden ist, auch ein Kohlenwasserstoffrest, insbesondere ein Methylrest, gebunden.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest R sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Acyloxyalkylreste, wie der 3-Acryloxypropyl- und 3-Methacryloxypropylrest; Hydroxyalkylreste, wie der Hydroxypropylrest und Reste der Formel

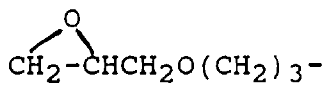

und $HOCH_2CH(OH)CH_2SCH_2CH_2$-.

Es handelt sich bei Rest $R^1$ um solche der Formel

$$R^3{}_2NR^4\text{-} \qquad (II),$$

worin $R^3$ gleich oder verschieden sein kann und Wasserstoff oder einwertiger, gegebenenfalls mit Aminogruppen substituierter Kohlenwasserstoffrest bedeutet und $R^4$ zweiwertiger Kohlenwasserstoffrest bedeutet.

Beispiele für Rest $R^3$ sind die für Rest R gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der Formel (II) mindestens ein Wasserstoffatom gebunden.

Bevorzugt handelt es sich bei Rest $R^4$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^4$ sind der Methylen-, Ethylen-, Propylen-, Butylen-, Cyclohexylen-, Octadecylen-, Phenylen- und Butenylenrest.

Beispiele für Reste $R^1$ sind

$H_2N(CH_2)_3$-,
$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,
$H_2N(CH_2)_4$-,
$H_2N(CH_2)_5$-,
$H(NHCH_2CH_2)_3$-,
$C_4H_9NH(CH_2)_2NH(CH_2)_2$-,
cyclo-$C_6H_{11}NH(CH_2)_3$-,
cyclo-$C_6H_{11}NH(CH_2)_2$-,
$(CH_3)_2N(CH_2)_3$-,
$(CH_3)_2N(CH_2)_2$-,
$(C_2H_5)_2N(CH_2)_3$- und
$(C_2H_5)_2N(CH_2)_2$- .

Bevorzugt handelt es sich bei Rest $R^1$ um $H_2N(CH_2)_3$- und $H_2N(CH_2)_2NH(CH_2)_3$-, wobei $H_2N(CH_2)_2NH(CH_2)_3$-

besonders bevorzugt ist.

Des weiteren kann es sich bei Rest $R^1$ auch um cyclische Aminreste, wie Piperidylreste, handeln.

Bevorzugt handelt es sich bei Rest $R^2$ um Wasserstoffatome und Alkylreste mit 1 bis 4 Kohlenstoffatomen, wobei der Methyl-, Ethyl- und Propylrest besonders bevorzugt sind.

Die Beispiele für Alkylreste R gelten im vollen Umfang auch für den Rest $R^2$.

Der durchschnittliche Wert für a ist 0 bis 2, vorzugsweise 0 bis 1,8.

Der durchschnittliche Wert für b ist 0,1 bis 0,6, vorzugsweise 0,15 bis 0,30.

Der durchschnittliche Wert für c ist 0 bis 0,8, vorzugsweise 0,01 bis 0,6.

Beispiele für Organopolysiloxane aus Einheiten der Formel (I) sind das Umsetzungsprodukt von Tetraethylsilikat mit N-(2-Aminoethyl)-3-aminopropyltrimethoxysilan mit einer Viskosität bei 25°C von 6 bis 7 $mm^2/s$ und einer Aminzahl von 2,15 (Siloxan i), das Umsetzungsprodukt von $\alpha,\omega$-Dihydroxydimethylpolysiloxan und N-(2-Aminoethyl)-3-aminopropyltrimethoxysilan mit einer Viskosität von 20 bis 50 $mm^2/s$ (25°C) und einer Aminzahl von 2,7 bis 3,2 (Siloxan ii) sowie das Umsetzungsprodukt von $CH_3Si(OC_2H_5)_{0,8}O_{1,1}$ und N-(2-Aminoethyl)-3-aminopropyltrimethoxysilan mit einer Viskosität von 60 $mm^2/s$ (25°C) und einer Aminzahl von 2,15 (Siloxan iii), wobei (Siloxan ii) und (Siloxan iii) bevorzugt und (Siloxan ii) besonders bevorzugt sind und die Aminzahl der Anzahl der ml 1-n-HCl, die zum Neutralisieren von 1 g Substanz erforderlich sind, entspricht.

Vorzugsweise haben die Organopolysiloxane aus Einheiten der Formel (I) eine Viskosität von 6 bis 60 $mm^2/s$, bezogen auf 25°C.

Organopolysiloxane aus Einheiten der Formel (I) können in bekannter Weise, beispielsweise durch Äquilibrieren bzw. Kondensieren von aminofunktionellen Silanen mit Organopolysiloxanen, die frei von basischem Stickstoff sind, hergestellt werden.

Die organischen oder anorganischen Säuren, die zur Herstellung von Bestandteil (A) der erfindungsgemäßen Zusammensetzung verwendet werden, können die gleichen sein, die auch bisher zur Herstellung von Salzen von organischer oder anorganischer Säure und Organopolysiloxan mit basischen Stickstoff aufweisenden, SiC-gebundenen Resten eingesetzt werden konnten. Beispiele für derartige Säuren sind HCl, $H_2SO_4$, Essigsäure, Propionsäure und Diethylhydrogenphosphat, wobei Essigsäure und Propionsäure bevorzugt und Essigsäure besonders bevorzugt sind.

Verbindungen, die als Komponente (A) in der erfindungsgemäßen Zusammensetzung eingesetzt werden können, sind bereits bekannt. Hierzu sei beispielsweise auf die eingangs erwähnte US 4,661,551 verwiesen.

Bei dem als Komponente (A) eingesetzten Organopolysiloxansalz kann es sich um eine einzelne Art dieses Salzes wie auch um ein Gemisch aus mindestens zwei Arten eines solchen Salzes handeln.

Bei den erfindungsgemäß eingesetzten hydrophoben Feststoffen (B), das heißt Feststoffen, die bei 20°C und 1020 hPa höchstens zu einem Gewichtsteil in 100 Gewichtsteilen Wasser löslich sind, handelt es sich bevorzugt um Füllstoffe, Pigmente, Biozide und ultraviolettes Licht absorbierende Feststoffe.

Beispiele für hydrophobe Füllstoffe sind nicht verstärkende Füllstoffe, also Füllstoffe mit einer BET-Oberfläche von bis zu 50 $m^2/g$, wie Quarz, Diatomeenerde, Calciumsilikat, Zirkoniumsilikat, Zeolithe, Montmorrillonite, wie Bentonite, Metalloxidpulver, wie Aluminium-, Titan-, Eisen- oder Zinkoxide bzw. deren Mischoxide, Bariumsulfat, Calciumcarbonat, Siliciumnitrid, Siliciumcarbid, Bornitrid, Glas- und Kunststoffpulver; verstärkende Füllstoffe, also Füllstoffe mit einer BET-Oberfläche von mehr als 50 $m^2/g$, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen.

Beispiele für Pigmente sind Erdpigmente, wie Kreide, Ocker, Umbra, Grünerde, Mineralpigmente, wie Titandioxid, Chromgelb, Mennige, Zinkgelb, Zinkgrün, Cadmiumrot, Kobaltblau, organische Pigmente, wie Sepia, Kasseler Braun, Indigo, Azo-Pigmente, Antrachinoide-, Indigoide-, Dioxazin-, Chinacridon-, Phthalocyanin-, Isoindolinon- und Alkaliblau-Pigmente, wobei viele der anorganischen Pigmente auch als Füllstoffe fungieren und umgekehrt.

Beispiele für hydrophobe Biozide sind, Fungizide, Insektizide, Herbizide und Algizide, wie Benzimidazolderivate.

Beispiele für ultraviolettes Licht absorbierende Feststoffe sind Benztriazol, Tolyltriazol und transparentes Eisenpigment.

Bevorzugt enthält die erfindungsgemäße Zusammensetzung als Feststoff (B) hydrophobe pyrogene hochdisperse Kieselsäure mit einer Oberfläche von etwa 140 $m^2/g$, welche durch Flammenhydrolyse flüchtiger Siliciumverbindungen und anschließender Hydrophobierung mit Organosilanen hergestellt werden kann.

Die erfindungsgemäßen Zusammensetzungen enthalten hydrophoben Feststoff (B) in Mengen von 0,1 bis 2 Gewichtsteilen, bevorzugt von 0,5 bis 2 Gewichtsteilen, je Gewichtsteil Bestandteil (A).

Es kann eine Art von Feststoff (B) wie auch ein Gemisch von mindestens zwei verschiedenen Arten derartiger Feststoffe eingesetzt werden.

Bei der gegebenenfalls eingesetzten Organosiliciumverbindung (C) handelt es sich vorzugsweise um solche aus Einheiten der Formel

$$R^5_d(OR^6)_eSiO_{\frac{4-d-e}{2}} \qquad (III),$$

worin

$R^5$ gleich oder verschieden sein kann und Wasserstoff oder einwertige, SiC-gebundene organische Reste bedeutet,
$R^6$ gleich oder verschieden sein kann und Wasserstoffatome oder einwertige organische Reste bedeutet,
d 0, 1, 2, 3 oder 4 und
e 0, 1, 2, 3 oder 4 ist,

mit der Maßgabe, daß die Summe aus d und e kleiner oder gleich 4 ist und der Gehalt an basischem Stickstoff 0 bis 0,5 Gewichtsprozent, bezogen auf das Gewicht der jeweiligen Organosiliciumverbindung, beträgt.

Beispiele für Rest $R^5$ sind die für Rest R angegebenen Beispiele sowie mit Aminogruppen substituierte Kohlenwasserstoffreste, wobei Kohlenwasserstoffreste mit 1 bis 8 Kohlenstoffatomen bevorzugt und der Methyl- und Isooctylrest besonders bevorzugt sind.

Beispiele für Rest $R^6$ sind die für $R^2$ angegebenen Beispiele, wobei der Methyl-, Ethyl- und Propylrest bevorzugt und der Methyl- und Ethylrest besonders bevorzugt sind.

Bei der Organosiliciumverbindung aus Einheiten der Formel (III) kann es sich um Silane handeln, d.h. die Summe aus d und e ist gleich 4.

Bei den Organosiliciumverbindungen aus Einheiten der Formel (III) kann es sich auch um Organopolysiloxane handeln, d.h. die Summe aus d und e ist kleiner oder gleich 3.

Beispiele für Silane der Formel (III) sind i-Octyltrimethoxysilan und i-Octyltriethoxysilan.

Beispiele für Organopolysiloxane aus Einheiten der Formel (III) sind Methylethoxypolysiloxane, Dimethylpolysiloxane und i-Octylmethoxypolysiloxane.

Vorzugsweise haben die Organopolysiloxane aus Einheiten der Formel (III) eine Viskosität von 5 bis 2000 $mm^2/s$, besonders bevorzugt 10 bis 500 $mm^2/s$, jeweils bezogen auf 25°C.

Bei der gegebenenfalls eingesetzten Organosiliciumverbindung (C) handelt es sich besonders bevorzugt um Silane und niedermolekulare Siloxane, insbesondere um Silane.

Verfahren zur Herstellung der Organosiliciumverbindungen aus Einheiten der Formel (III) sind vielfach bekannt.

Falls zur Herstellung der erfindungsgemäßen Zusammensetzung Organosiliciumverbindung (C) verwendet wird, wird diese in Mengen von vorzugsweise 0,5 bis 15 Gewichtsteilen, besonders bevorzugt 1 bis 3 Gewichtsteilen, je Gewichtsteil Komponente (A), eingesetzt.

Bevorzugt enthalten die erfindungsgemäßen Zusammensetzungen Komponente (C).

Bei der gegebenenfalls eingesetzten Organosiliciumverbindung (C) kann es sich um eine Art wie auch um ein Gemisch aus mindestens zwei Arten einer derartigen Organosiliciumverbindung handeln.

Die erfindungsgemäßen Zusammensetzungen können weitere Komponenten, wie beispielsweise Konservierungsmittel, Dispergiermittel und organisches Lösungsmittel, enthalten.

Vorzugsweise sind die erfindungsgemäßen Zusammensetzungen jedoch frei von organischem Lösungsmittel oder enthalten organisches Lösungsmittel in Mengen von höchstens 10 Gewichtsprozent, bezogen auf das Gesamtgewicht an Komponente (A) und gegebenenfalls eingesetzter Komponente (C).

Die erfindungsgemäße Zusammensetzung hat einen pH-Wert von vorzugsweise 4 bis 7, besonders bevorzugt 5.

Die erfindungsgemäßen Zusammensetzungen werden durch Vermischen von Organopolysiloxan aus Einheiten der Formel (I) mit organischer oder anorganischer Säure zur Bildung des Bestandteils (A) und mit Bestandteil (B) sowie gegebenenfalls mit Bestandteil (C) hergestellt. Vorzugsweise wird dieses Vermischen bei einer Temperatur von 20 bis 120°C und einem Druck von 900 bis 1100 hPa durchgeführt.

Die erfindungsgemäßen Zusammensetzungen haben den Vorteil, daß sie mit Wasser spontan, d.h. ohne Aufwendung hoher mechanischer Energie, durch bloßes Eingießen in Wasser und Umrühren stabile wäßrige Verdünnungen ergeben. Dabei ist der erfindungsgemäß eingesetzte hydrophobe Feststoff (B) gleichmäßig und feinstdispers im Wasser verteilt.

Die erfindungsgemäßen Zusammensetzungen lassen sich ausgezeichnet mit Wasser zu stabilen Mischungen verdünnen. Vorzugsweise werden die erfindungsgemäßen Zusammensetzungen mit Wasser in Mengen von 50 bis 99 Gewichtsprozent, besonders bevorzugt 75 bis 99 Gewichtsprozent, jeweils bezogen auf das Gesamtgewicht der Verdünnung, verdünnt.

Die erfindungsgemäßen Zusammensetzungen bzw. die durch Verdünnen mit Wasser erhaltenen Gemische eignen sich für alle Anwendungen, bei denen Organosiliciumverbindungen, insbesondere in mit Wasser verdünnter Form, eingesetzt werden können, wie beispielsweise zur Glanz- und Griffverbesserung von Kunstleder oder natürlichem

Leder, als Mittel zum Wasserabweisendmachen und gegebenenfalls Plakatabweisendmachen in oder auf mineralischen Baustoffen einschließlich Fassaden, Straßen und Brücken, wie z.B. Dachziegel, Ziegelsteinen, bewehrtem oder unbewehrtem Beton, Kalksteinen, Gips, Schlackensteinen, Kalksandsteinen und Asbest, als Zusatz für Verputze und mit Wasser verdünnbaren Anstrichfarben.

Ferner eignen sich die erfindungsgemäßen Zusammensetzungen bzw. die durch Verdünnen mit Wasser erhaltenen Gemische als Mittel, die zur Sperrung von aufsteigender Mauerfeuchtigkeit durch Löcher in die Mauer eingebracht werden, oder als Mittel zur Sperrung von anderer unerwünschter Wasserwanderung, als Mittel zur Imprägnierung von feinteiligen anorganischen Stoffen, wie Perlit, Vermiculit oder Füllstoffen, als Mittel zum Wasserabweisendmachen von Metallen, Textilien, Leder, Papier und Pappe, als Zusätze zu Polituren, als Mittel zum Wasserabweisendmachen von Wärmedämmstoffen, als Dispergiermittel bzw. als Zusätze bei der Polymerisation von aliphatischen Kohlenstoff-Kohlenstoff-Doppelbindungen enthaltenden Monomeren, wie Vinylchlorid oder Vinylacetat, und als Verlaufsverbesserungsmittel in mit Wasser verdünnbaren Lacken.

Des weiteren eignen sich die erfindungsgemäßen Zusammensetzungen bzw. die durch Verdünnen mit Wasser erhaltenen Gemische hervorragend zur Behandlung von Holz.

Die erfindungsgemäßen Zusammensetzungen bzw. die durch Verdünnen mit Wasser erhaltenen Gemische haben dabei den Vorteil, daß der enthaltene Feststoff auf einfache Art und gleichmäßig auf dem Untergrundsubstrat verteilt werden kann.

Ein weiterer Gegenstand der vorliegenden Erfindung ist ein Verfahren zur Behandlung von Holz, dadurch gekennzeichnet, daß die erfindungsgemäße Zusammensetzung bzw. das durch Verdünnen mit Wasser erhaltene Gemisch auf die zu behandelnde Holzoberfläche aufgebracht wird.

Das Aufbringen kann dabei auf an sich bekannte Weise erfolgen, wie beispielsweise durch Streichen, Tauchen, Fluten und Sprühen.

Vorzugsweise werden zur erfindungsgemäßen Behandlung von Holz die erfindungsgemäßen Zusammensetzungen im Gemisch mit Wasser im Verhältnis 1:9 eingesetzt.

Das erfindungsgemäße Verfahren hat den Vorteil, daß das behandelte Holz wasserabweisende Eigenschaften aufweist. Darüberhinaus gelingt es mit dem erfindungsgemäßen Verfahren, den als Komponente (B) in der erfindungsgemäßen Zusammensetzung eingesetzten Feststoff, insbesondere Pigmente oder Biozide, gleichmäßig und feinst auf dem behandelten Holz zu verteilen.

Des weiteren hat das erfindungsgemäße Verfahren den Vorteil, daß die Fixierung des Feststoffs auf dem Substrat dauerhaft ist und ein Auswaschen verhindert wird.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

**Beispiel 1**

A Herstellung von Organopolysiloxanen mit basischem Stickstoff (Siloxan A)

In einen mit Rührer, Tropftrichter und Rückflußkühler ausgestatteten 1-l-Dreihalskolben werden unter Rühren zu einem Gemisch aus 0,2 g KOH in 4 g Methanol und 500 g eines $\alpha,\omega$-Dihydroxydimethylpolysiloxans mit einem durchschnittlichen Molekulargewicht von etwa 4000 g/Mol 150 g N-(2-Aminoethyl)-3-aminopropyltrimethoxysilan gegeben und das so erhaltene Gemisch 6 Stunden unter Rückfluß zum Sieden erhitzt. Anschließend wird auf 30°C abgekühlt und 2,5 ml 10%ige Salzsäure zugegeben. Durch Erhitzen auf bis zu 140°C wird schließlich das Methanol abdestilliert und das so erhaltene Organopolysiloxan durch Filtrieren von KCl befreit. Das erhaltene Organopolysiloxan hat eine Viskosität von 50 $mm^2/s$ und enthält 2,9 % basischen Stickstoff, bezogen auf sein Gewicht.

20 g des oben unter A hergestellten Aminosiloxans, 3 g Essigsäure, 47 g i-Octyltrimethoxysilan und 30 g hydrophobe pyrogene hochdisperse Kieselsäure (käuflich erhältlich unter der Bezeichnung HDK H 2000 bei der Wacker-Chemie GmbH) werden miteinander vermischt, wobei sich eine homogene Mischung mit einem leichten Tyndall-Effekt ergibt. Die so erhaltene Mischung ist beim Einbringen in Wasser spontan selbstdispergierend, wobei sich die hydrophobe Kieselsäure feinstdispers in Wasser verteilt. Die so erhaltene 10 %ige wäßrige Verdünnung ist bei Raumtemperatur für einen Zeitraum von über 6 Monaten stabil und zeigt im Transmissionselektronenmikroskop eine Teilchengröße der hydrophoben Kieselsäure von ca. 10 bis 20 nm.

**Vergleichsbeispiel 1**

10 g hydrophobe pyrogene hochdisperse Kieselsäure (käuflich erhältlich unter der Bezeichnung HDK H 2000 bei der Wacker-Chemie GmbH) wird durch Einschütten und Umrühren in 100 g Wasser eingebracht. Selbst nach 24 Stunden konnte weder Löslichkeit noch Benetzung der hydrophoben Kieselsäure beobachtet werden.

**Beispiel 2**

B Herstellung von Organopolysiloxanen mit basischem Stickstoff (Siloxan B)

In einen mit Rührer, Tropftrichter und Rückflußkühler ausgestatteten 1-l-Dreihalskolben werden unter Rühren zu einem Gemisch aus 0,2 g KOH in 4 g Methanol und 500 g eines Organopolysiloxans der Summenformel

$$CH_3Si(OC_2H_5)_{0,8}O_{1,1}$$

mit einem durchschnittlichen Molekulargewicht von etwa 600 g/Mol und einer Viskosität von ca. 20 $mm^2/s$ 150 g N-(2-Aminoethyl)-3-aminopropyltrimethoxysilan gegeben und das so erhaltene Gemisch 6 Stunden unter Rückfluß zum Sieden erhitzt. Anschließend wird auf 30°C abgekühlt und 2,5 ml 10%ige Salzsäure zugegeben. Durch Erhitzen auf bis zu 140°C wird schließlich das Methanol abdestilliert und das so erhaltene Organopolysiloxan durch Filtrieren von KCl befreit. Das erhaltene Organopolysiloxan hat eine Viskosität von 60 $mm^2/s$ und ein Molgewicht von etwa 1800 und enthält 2,9 % basischen Stickstoff, bezogen auf sein Gewicht.

25 g des oben unter B hergestellten Aminosiloxans, 5 g Propionsäure, 65 g Propyltrimethoxysilan und 5 g eines UV-Lichtschutzmittels, welches als UV-Absorber Benztriazol enthält, (käuflich erhältlich unter der Bezeichnung "Tinuvin 320" bei der Ciba-Geigy) werden miteinander vermischt, wobei sich eine homogene Mischung mit einem leichten Tyndall-Effekt ergibt. Die so erhaltene Mischung ist beim Einbringen in Wasser spontan selbstdispergierend, wobei sich das hydrophobe UV-Lichtschutzmittel feinstdispers in Wasser verteilt.

Die so erhaltene 10 %ige wäßrige Verdünnung ist bei Raumtemperatur für einen Zeitraum von über 6 Monaten stabil und zeigt im Transmissionselektronenmikroskop eine Teilchengröße des UV-Lichtschutzmittels von ca. 10 bis 50 nm.

**Vergleichsbeispiel 2**

0,1 g eines UV-Lichtschutzmittels, welches als UV-Absorber Benztriazol enthält, (käuflich erhältlich unter der Bezeichnung "Tinuvin 320" bei der Ciba-Geigy) wird durch Einschütten und Umrühren in 10 g Wasser eingebracht. Selbst nach einer Woche konnte weder Löslichkeit noch Benetzung des hydrophoben UV-Lichtschutzmittels beobachtet werden. Das UV-Lichtschutzmittel kriecht quasi vom Wasser weg die Gefäßwand entlang.

**Beispiel 3**

Ein Fichtenholzbrett (30 cm x 15 cm x 2 cm) wird für 10 Minuten in 1000 ml der 10 %igen Verdünnung aus Beispiel 1 getaucht und anschließend bei Raumtemperatur über einen Zeitraum von 14 Tagen getrocknet. Danach wird bei dem so behandelten Holzbrett wie auch bei einem unbehandelten, gleichgroßen Fichtenholzbrett eine Druckwasserlagerung durchgeführt. Dabei wird das Holzbrett in einer Wanne mit einem Gewicht beschwert 5 cm unter Wasser gelagert. Die Ergebnisse über die Wasseraufnahme, jeweils bezogen auf das Trockengewicht des Holzes, in Abhängigkeit von der Lagerzeit finden sich in Tabelle 1.

Tabelle 1

| Lagerung | behandeltes Holz | unbehandeltes Holz |
|---|---|---|
| 2 h | 2 % | 10 % |
| 24 h | 8 % | 30 % |

Auf das erfindungsgemäß behandelte Holz aufgebrachtes Wasser perlt ab, wobei ein Kontaktwinkel von 110° bestimmt wird.

**Beispiel 4**

Ein Blatt (27 cm x 27 cm x 0,5 mm) einer Wischrolle aus 100 % Altpapier (käuflich erhältlich unter der Bezeichnung "Repur clean" bei der Scott-Feldmühle GmbH) wird mit 10 ml der 10 %igen Verdünnung aus Beispiel 1 gleichmäßig auf beiden Seiten besprüht und anschließend 14 Tage bei Raumtemperatur getrocknet. Das so behandelte Papier zeigt eine hohe Wasserabweisung und Dichtigkeit gegen flüssiges Wasser. Ein aus diesem Papier hergestelltes Behältnis kann 20 g flüssiges Wasser mindestens 8 Stunden ohne Durchfeuchtung aufbewahren.

**Beispiel 5**

Die in Beispiel 4 beschriebene Arbeitsweise wird wiederholt mit der Abänderung, daß anstelle des Papiers Webware aus 100% Baumwolle (gebleicht) (27 cm x 27 cm) behandelt wird. Die so behandelte Baumwolle zeigt hohe Wasserabweisung und Dichtigkeit gegen flüssiges Wasser wie in Beispiel 4 beschrieben.

**Beispiel 6**

Die in Beispiel 4 beschriebene Arbeitsweise wird wiederholt mit der Abänderung, daß anstelle des Papiers der Wischrolle Zeitungspapier (27 cm x 27 cm x 0,lmm) behandelt wird. Das so behandelte Zeitungspapier zeigt hohe Wasserabweisung und Dichtigkeit gegen flüssiges Wasser wie in Beispiel 4 beschrieben.

**Beispiel 7**

Ein Wellpappkarton (10 cm x 20 cm x 0,3 cm) wird eine Sekunde lang in 1000 ml der 10 %igen Verdünnung aus Beispiel 1 getaucht und anschließend 14 Tage bei Raumtemperatur getrocknet. Der so behandelte Karton sowie ein unbehandelter Karton gleicher Größe werden auf Wasser gelegt. Nach 2 Stunden ist der unbehandelte Karton mit Wasser völlig vollgesogen und hat sich nahezu aufgelöst. Der erfindungsgemäß behandelte Karton hingegen schwimmt selbst nach 24 Stunden noch auf der Wasseroberfläche. Die Wasseraufnahme, bezogen auf das Trockengewicht des Kartons beträgt in diesem Fall 5 %.

**Beispiel 8**

Ein Kieferholzbrett (7 cm x 14 cm x 0,5 cm) wird für 10 Minuten in 1000 ml der 10 %igen Verdünnung aus Beispiel 2 getaucht und anschließend bei Raumtemperatur über einen Zeitraum von 14 Tagen getrocknet. Danach wird bei dem so behandelten Holzbrett wie auch bei einem unbehandelten, gleichgroßen Kieferholzbrett eine Schnellbewitterung im QUV--B-Bewitterungsgerät (Gerät der Firma Pausch) für einen Zeitraum von 168 Stunden durchgeführt. Dabei wird innerhalb 8 Stunden bestrahlt, gefolgt von jeweils 4 Stunden Betauungsphase, wobei während der Bestrahlung Temperaturen bis 42°C erreicht werden (280-315 nm).

Das erfindungsgemäß behandelte Holzbrett zeigt im Vergleich zur unbehandelten Holzprobe eine signifikant geringere Verdunklung des Holzes. Des weiteren zeigt das erfindungsgemäß behandelte Holzbrett einen deutlichen Abperleffekt sowie eine stark verminderte Wasseraufnahme im Vergleich zum unbehandelten Holzbrett.

**Patentansprüche**

**1.** In Wasser selbstdispergierende, Organopolysiloxan enthaltende Zusammensetzungen aus

(A) Salz von organischer oder anorganischer Säure und Organopolysiloxan der Formel

$$R_aR^1_b(OR^2)_cSiO_{\frac{4-a-b-c}{2}} \quad (I),$$

worin

R gleich oder verschieden sein kann und Wasserstoff oder einwertige, von basischem Stickstoff freie, SiC-gebundene Kohlenwasserstoffreste mit 1 bis 20 Kohlenstoffatomen bedeutet,

$R^1$ gleich oder verschieden sein kann und einwertige, SiC-gebundene Reste mit basischem Stickstoff nämlich cyclische Aminreste oder solche der Formel

$$R^3_2NR^4- \quad (II),$$

bedeutet, worin $R^3$ gleich oder verschieden sein kann und Wasserstoff oder einwertiger, gegebenenfalls mit Aminogruppen substituierter Kohlenwasserstoffrest bedeutet und $R^4$ zweiwertiger Kohlenwasserstoffrest ist,

$R^2$ gleich oder verschieden sein kann und Wasserstoffatome oder einwertige organische Reste bedeutet,
a 0, 1, 2 oder 3,
b 0, 1, 2 oder 3 und
c 0, 1, 2 oder 3 ist,

mit der Maßgabe, daß die Summe aus a, b und c kleiner oder gleich 3 ist und Rest $R^1$ in Mengen von mehr als 0,5 Gewichtsprozent basischem Stickstoff pro Organopolysiloxanmolekül vorhanden ist,

(B) bei 20°C und 1020 hPa höchstens zu einem Gewichtsteil in 100 Gewichtsteilen Wasser löslichem Feststoff, ausgenommen bei 20°C und 1020 hPa feste Organosiliciumverbindungen, die sich unter diesen Bedingungen zu mehr als 50 Gewichtsteilen in 100 Gewichtsteilen (A), gegebenenfalls im Gemisch mit (C), lösen,
und gegebenenfalls

(C) Organosiliciumverbindung mit basischem Stickstoff in Mengen von 0 bis 0,5 Gewichtsprozent, bezogen auf das Gewicht dieser Organosiliciumverbindung,
sowie gegebenenfalls weiteren Komponenten, ausgewählt aus der Gruppe bestehend aus Konservierungsmittel, Dispergiermittel und organischem Lösungsmittel, wobei die Zusammensetzungen Feststoff (B) in Mengen von 0,1 bis 2 Gewichtsteilen, je Gewichtsteil Bestandteil (A), enthalten.

**2.** Zusammensetzung nach Anspruch 1, dadurch gekennzeichnet, daß es sich bei dem Feststoff (B) um solche, ausgewählt aus der Gruppe bestehend aus Füllstoffen, Pigmenten, Biozide und ultraviolettes Licht absorbierenden Feststoffen, handelt.

**3.** Zusammensetzung nach Anspruch 1 oder 2, dadurch gekennzeichnet, daß die Organosiliciumverbindung (C) solche aus Einheiten der Formel

$$R^5_d(OR^6)_eSiO_{\frac{4-d-e}{2}} \quad (III)$$

sind, worin

$R^5$ gleich oder verschieden sein kann und Wasserstoff oder einwertige, SiC-gebundene organische Reste bedeutet,
$R^6$ gleich oder verschieden sein kann und Wasserstoffatom oder einwertige organische Reste bedeutet,
d 0, 1, 2, 3 oder 4 und
e 0, 1, 2, 3 oder 4 ist,

mit der Maßgabe, daß die Summe aus d und e kleiner oder gleich 4 ist und der Gehalt an basischem Stickstoff 0 bis 0,5 Gewichtsprozent, bezogen auf das Gewicht der jeweiligen Organosiliciumverbindung, beträgt.

**4.** Zusammensetzung nach einem der Ansprüche 1 bis 3, dadurch gekennzeichnet, daß sie Organosiliciumverbindung (C) enthält.

**5.** Zusammensetzung nach Anspruch 4, dadurch gekennzeichnet, daß sie Komponente (C) in Mengen von 0,5 bis 15 Gewichtsteilen, je Gewichtsteil Bestandteil (A), enthält.

## Claims

**1.** Organopolysiloxane-containing compositions which are self-dispersing in water, which comprise

(A) salt of an organic or inorganic acid and an organopolysiloxane of the formula

$$R_aR^1_b(OR^2)_cSiO_{\frac{4-a-b-c}{2}} \quad (I)$$

in which

R can be identical or different and denotes hydrogen or monovalent, SiC-bonded hydrocarbon radicals having 1 to 20 carbon atoms which are free from basic nitrogen,

$R^1$ can be identical or different and denotes monovalent, SiC-bonded radicals containing basic nitrogen, namely cyclic amine radicals or those of the formula

$$R^3{}_2NR^4- \quad (II)$$

in which $R^3$ can be identical or different and denotes hydrogen or a monovalent hydrocarbon radical which is optionally substituted by amino groups and $R^4$ denotes a divalent hydrocarbon radical,

$R^2$ can be identical or different and denotes hydrogen atoms or monovalent organic radicals,

a is 0, 1, 2 or 3,

b is 0, 1, 2 or 3 and

c is 0, 1, 2 or 3,

with the proviso that the sum of a, b and c is less than or equal to 3 and the radical $R^1$ is present in amounts of more than 0.5 per cent by weight of basic nitrogen per organopolysiloxane molecule, which contains SiC-bonded radicals containing basic nitrogen in amounts of at least 0.5 per cent by weight of basic nitrogen, based on the weight of this organopolysiloxane,

(B) solid which is soluble to the extent of not more than one part by weight in 100 parts by weight of water at 20°C under 1020 hPa, excluding organosilicon compounds which are solid at 20°C under 1020 hPa and dissolve under these conditions to the extent of more than 50 parts by weight in 100 parts by weight of (A), if appropriate as a mixture witn (C),

and if appropriate

(C) organosilicon compound containing basic nitrogen in amounts of 0 to 0.5 per cent by weight, based on the weight of this organosilicon compound,

and, if appropriate, further components, selected from the group consisting of preservative, dispersing agent and organic solvent, where the compositions comprise the solid (B) in amounts of from 0.1 to 2 parts by weight per part by weight of constituent (A).

**2.** Composition according to Claim 1, characterized in that the solid (B) is one chosen from the group consisting of fillers, pigments, biocides and solids which absorb ultraviolet light.

**3.** Composition according to Claim 1 or 2, characterized in that the organosilicon compound (C) is one comprising units of the formula

$$R^5_d(OR^6)_eSiO_{\frac{4-d-e}{2}} \quad (III)$$

in which

$R^5$ can be identical or different and denotes hydrogen or monovalent, SiC-bonded organic radicals,

$R^6$ can be identical or different and denotes hydrogen atom or monovalent organic radicals,

d is 0, 1, 2, 3 or 4 and

e is 0, 1, 2, 3 or 4,

with the proviso that the sum of d and e is less than or equal to 4 and the content of basic nitrogen is 0 to 0.5 per cent by weight, based on the weight of the particular organosilicon compound.

**4.** Composition according to any of Claims 1 to 3, characterized in that it contains organosilicon compound (C).

5. Composition according to Claim 4, characterized in that it contains component (C) in amounts of 0.5 to 15 parts by weight per part by weight of constituent (A).

## Revendications

1. Compositions autodispersables dans l'eau, contenant un organopolysiloxane, constituées de

(A) un sel d'acide organique ou inorganique et d'un organopolysiloxane de formule

$$R_aR^1{}_b(OR^2)_cSiO_{(4-a-b-c)/2} \qquad (I),$$

dans laquelle

R peut être identique ou différent et représente un atome d'hydrogène ou des radicaux hydrocarbure monovalents, liés à Si-C, exempts d'azote basique, ayant 1 à 20 atomes de carbone;
$R^1$ peut être identique ou différent et représente des radicaux monovalents, liés à Si-C, ayant un azote basique, à savoir des radicaux amine cycliques ou ceux de formule

$$R^3{}_2NR^4- \qquad (II),$$

dans laquelle
$R^3$ peut être identique ou différent et représente un atome d'hydrogène ou un radical hydrocarbure monovalent, facultativement substitué par des groupes amino et $R^4$ est un radical hydrocarbure bivalent;
$R^2$ peut être identique ou différent et représente un atome d'hydrogène ou des radicaux organiques monovalents;
a est 0, 1, 2 ou 3;
b est 0, 1, 2 ou 3, et
c est 0, 1, 2 ou 3,

avec la condition que la somme de a, b et c soit inférieure ou égale à 3 et que le radical $R^1$ soit présent en des quantités de plus de 0,5% en poids d'azote basique par molécule d'organopolysiloxane,
(B) un solide soluble dans l'eau à 20°C et 1020 hPa tout au plus à 1 partie en poids dans 100 parties en poids d'eau, à l'exclusion des composés organosiliciés solides à 20°C et 1020 hPa, qui sont solubles dans ces conditions, à plus de 50 parties en poids dans 100 parties en poids de (A), facultativement en mélange avec (C); et facultativement,
(C) un composé organosilicié ayant un azote basique en des quantités de 0 à 0,5% en poids, sur base du poids de ce composé organosilicié,

ainsi que facultativement d'autres composants, choisis dans le groupe constitué d'agents de conservation, d'agents de dispersion et de solvants organiques,
les compositions contenant le solide (B) en des quantités de 0,1 à 2 parties en poids, par partie en poids du constituant (A).

2. Composition suivant la revendication 1, caractérisée en ce que le solide (B) est choisi dans le groupe constitué de charges, de pigments, de biocides et de solides absorbant la lumière ultraviolette.

3. Composition suivant la revendication 1 ou 2, caractérisée en ce que le composé organosilicié (C) est constitué de motifs de formule

$$R^5{}_d(OR^6)_eSiO_{(4-d-e)/2} \qquad (III),$$

dans laquelle

$R^5$ peut être identique ou différent et représente un atome d'hydrogène ou des radicaux organiques monovalents, liés à Si-C;
$R^6$ peut être identique ou différent et représente un atome d'hydrogène ou des radicaux organiques monovalents,
d-est 0, 1, 2, 3 ou 4, et
e est 0, 1, 2, 3 ou 4,

avec la condition que la somme de d et e soit inférieure ou égale à 4 et que la teneur en azote basique s'élève à 0 à 0,5% en poids, sur base du poids de chaque composé organosilicié.

**4.** Composition suivant l'une quelconque des revendications 1 à 3, caractérisée en ce qu'elle contient le composé organosilicié (C).

**5.** Composition suivant la revendication 4, caractérisée en ce qu'elle contient le composant (C) en des quantités de 0,5 à 15 parties en poids, par partie en poids du constituant (A).